# EUROPEAN PATENT SPECIFICATION

(11) **EP 2 364 805 B1**
(45) Date of publication and mention of the grant of the patent: **11.07.2012**
(21) Application number: 11001886.8
(22) Date of filing: 07.03.2011
(51) Int. Cl.: B23D 45/02, B27B 27/04

(54) **A cutting unit for a cutting-off machine**
Schneidvorrichtng für eine Trennmaschine
Une unité de coupe pour une machine à tronçonner

(30) Priority: 12.03.2010 IT MO20100065
(43) Date of publication of application: 14.09.2011
(73) Proprietor: Emmegi S.P.A., 41010 Soliera (MO) (IT)
(72) Inventor: Villa, Marco, 42122 Reggio Emilia (IT); Ghizzoni Giulio, 42017 Novellara (Regio Emilia) (IT)
(74) Representative: Gotra, Stefano

(56) References cited:
- WO-A1-2009/068982
- DE-U1- 8 631 960

## Description

The invention relates to a cutting unit for a cutting-off machine, i.e. a machine tool suitable for cutting work-pieces, in particular extruded or profiled bars made of metal materials, or polymer materials or wood or composite or laminated materials. The invention further relates to a cutting-off machine comprising a cutting unit of the above-mentioned type.

In cutting-off machines it is particularly important to maximise the dimensions of the cross section of the bar which a blade of a cutting-off machine is able to cut.

To meet this requirement, international patent application PCT/IB2008/003274 discloses a cutting-off machine, as per the preamble of claim 1, having a cutting head which can be inclined about an inclination axis that is substantially horizontal. The cutting-off machine further comprises a rest plane on which the bar to be cut can be rested. The position of the rest plane is freely selectable independently of the position of the inclination axis.

By changing the position of the rest plane, it is possible to adapt the cutting-off machine to cut bars having cross sections whose sizes vary from one another. For example, for cutting bars having a cross section that extends mainly horizontally the position of the rest plane can be raised, such as to bring the rest plane near a rotation axis of the blade. The opposite happens if bars are to be cut having a cross section that extends mainly vertically.

Although the cutting-off machine disclosed in PCT/IB2008/003274 enables cutting bars of many different types, it is however desirable to further improve the cutting-off machine disclosed in PCT/IB2008/003274, in particular in relation to the ability to cut bars having a cross section that extends mainly horizontally.

An object of the invention is to improve existing cutting-off machines.

A further object is to provide a cutting unit for a cutting-off machine which is able to cut work-pieces having a cross section that exhibits a relevant horizontal dimension.

A further object is to provide a cutting unit for a cutting-off machine that is particularly versatile, i.e. able to cut a plurality of work-pieces of different cross sections.

According to the invention, there is provided a cutting unit for a cutting-off machine, comprising a rest plane for supporting a work-piece to be cut, an abutment surface against which a lateral face of the work-piece can abut, a circular blade fixed to a flange, the flange being supported in a cutting head which can be inclined about an inclination axis, the position of the inclination axis being independent of the position of the rest plane, characterised in that the cutting unit comprises a selecting device for selecting a first working mode, in which the flange is located behind the abutment surface during cutting, or alternatively a second working mode, in which the flange exits from the abutment surface above the rest plane during cutting. The cutting unit according to the invention enables cutting work-pieces having a cross section exhibiting a considerable dimension parallel to the rest plane, i.e. for example a considerable horizontal dimension. In the second working mode, the flange exits from the abutment surface, which enables maximising the portion of blade that can be used for cutting, in a direction parallel to the rest plane.

In the first working mode, the flange is behind the abutment surface, which makes it possible to cut work-pieces having a relevant dimension along the abutment surface, i.e. for example along a vertical direction. In the first working mode, the dimension of the flange does not limit the height of the cross section that can be cut.

By appropriately selecting the first working mode or the second working mode, the cutting unit according to the invention enables a large number of different work-pieces to be cut.

The cutting unit according to the invention is therefore particularly versatile.

The rest plane that can be positioned independently of the axis of inclination enables a further broadening of the range of work-pieces that can be processed by the cutting unit according to the invention.

The invention can be better understood and carried out with reference to the accompanying figures of the drawings, which illustrate a non-limiting and exemplary embodiment thereof, in which:
Figure 1 is a perspective view of a cutting unit for a cutting-off machine, shown in a rest configuration of a first working mode;
Figure 2 is a perspective view of the cutting unit of Figure 1, shown in a cutting configuration of the first working mode;
Figure 3 is a perspective view of the cutting unit of Figure 1, shown in a cutting configuration of a second working mode;
Figure 4 is a frontal view of the cutting unit of Figure 1, shown in an inclined cutting configuration of the second working mode;
Figure 5 is a lateral view of the cutting unit of Figure 2, in which a part of the base is not shown;
Figure 6 is a lateral view as in Figure 5, showing the cutting unit in the configuration of Figure 3;
Figure 7 shows the diagram in the first working mode;
Figure 8 shows the cutting diagram in the second working mode.

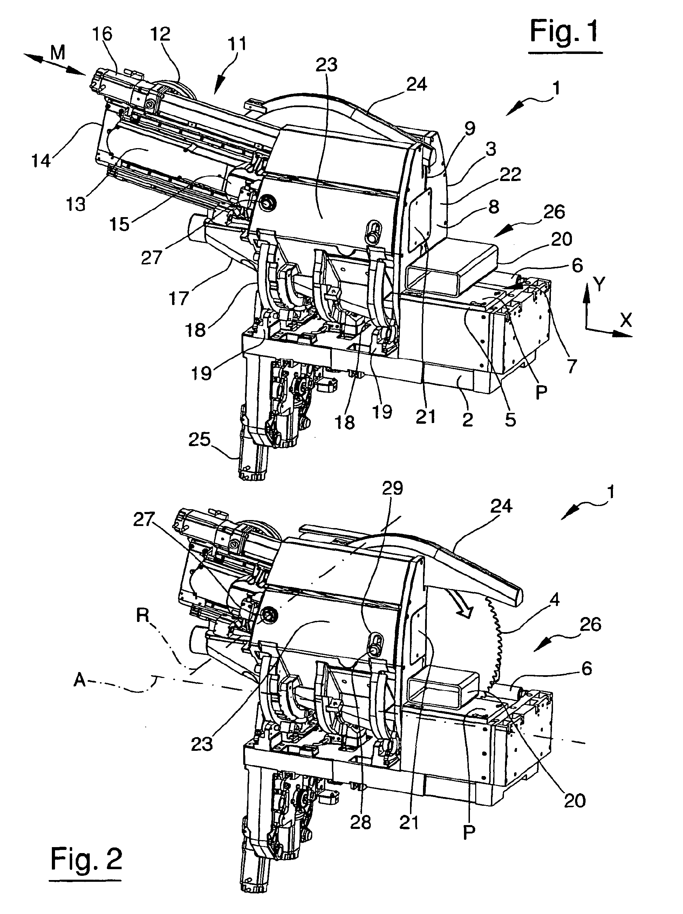

Figure 1 shows a cutting unit 1 for a cutting-off machine. The cutting unit 1 comprises a base 2 and a cutting head 3, the cutting head 3 being supported by the base 2 such as to be movable with respect to the base 2, as will be described herein below. The cutting head 3 is provided with a blade 4, shown in Figure 2. The blade 4 can be circular and is suitable for cutting work-pieces such as bars 20, for example profiled or extruded bars.

The bars 20 can be made of metal, for example steel, aluminium or light alloys, or can be made of polymer material, for example polyvinylchloride (PVC), or can also be made of wood, composite materials or laminated materials. The bars cut by the cutting unit 1 can be used for example in the field of doors or windows, especially for manufacturing door or window frames, in the field of furniture or in the field of construction. The base 2 supports a rest device defining a rest plane P, for example horizontal, on which a bar 20 to be cut can be rested. In the illustrated example, the rest device comprises a rest element 5 having a flat upper surface defining the above-mentioned rest plane P. The rest device can further comprise a rest roller 6 at the same height as the rest element 5. In the rest device a space 7 is provided. Through the space 7, the blade 4 can pass during the cutting operation. In the illustrated example, the space 7 is defined between the rest element 5 and the rest roller 6, which are distanced from one another.

The cutting unit 1 further comprises an abutment surface 8, for example flat, against which a lateral surface of the bar 20 to be cut can abut. The abutment surface 8 can be arranged perpendicularly to the rest plane P. In the illustrated embodiment, in which the rest plane P is horizontal, the abutment surface 8 can be vertical.

The abutment surface 8 can delimit a front wall 22 of a case 23 internally of which the blade 4 is received in a rest condition.

The rest plane P and the abutment surface 8 define a work zone 26 in which the bar 20 can be cut.

A slit 9 is obtained in the abutment surface 8, through which the blade 4 can pass during the cutting operation. The slit 9 can be closed at least partially by a closing element 21, having for example the shape of a flat plate. The closing element 21 can be fastened to the front wall 22 by removable fastening means, comprising for example a plurality of screws. The closing element 21 can be made of a soft material, for example aluminium. In this way, the first time that the blade 4 exits from the case 23, the blade 4 cuts the closing element 21 into two parts, which remain fixed to the front wall 22. In this way the blade 4 creates a passage zone in the closing element 21.

The closing element 21 can be arranged flush with the abutment surface 8.

A protection element 24 is associated to the blade 4, the protection element 24 covering an upper portion of the blade 4 such as to prevent an operator from coming accidentally into contact with the above-mentioned upper portion and thus injuring himself.

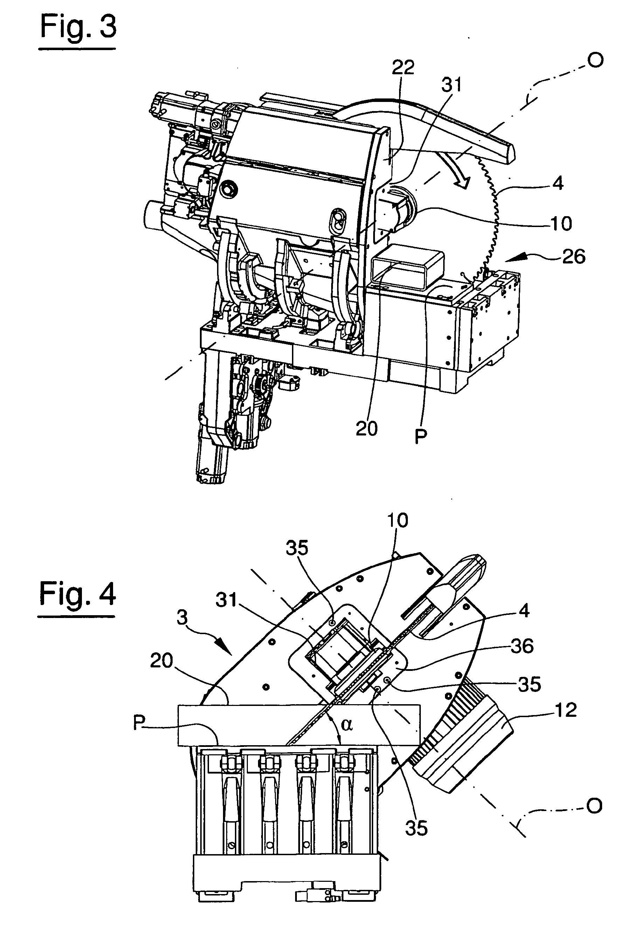

The blade 4 is supported by a flange 10, shown in Figures 3, 4 and 6. In particular, the flange 10 is fixed to a central region of the blade 4, for example near a central hole of the blade 4.

The cutting unit 1 comprises a driving group 11 for moving the blade 4 such that the blade 4 can perform the cut. The driving group 11 is included in the cutting head 3.

The driving group 11 comprises a rotating device for rotating the blade 4 about a rotation axis O, shown in Figures 3 and 4. The rotating device can be coupled to the flange 10. As the blade 4 is fixed to the flange 10, by rotating the flange 10 the blade 4 is rotated about the rotation axis O.

The rotating device comprises a motor 12 coupled to the blade 4 via a transmission device, for example a belt transmission device, which can be arranged internally of a housing 13.

The driving group 11 further comprises an advancement device for advancing the blade 4 along a movement direction M, such that the blade 4 is brought into contact with the bar 20 to be cut and interacts with successive portions of the bar 20. The advancement device further enables bringing the blade 4 back in order to disengage it from the bar 20 after the bar 20 has been cut.

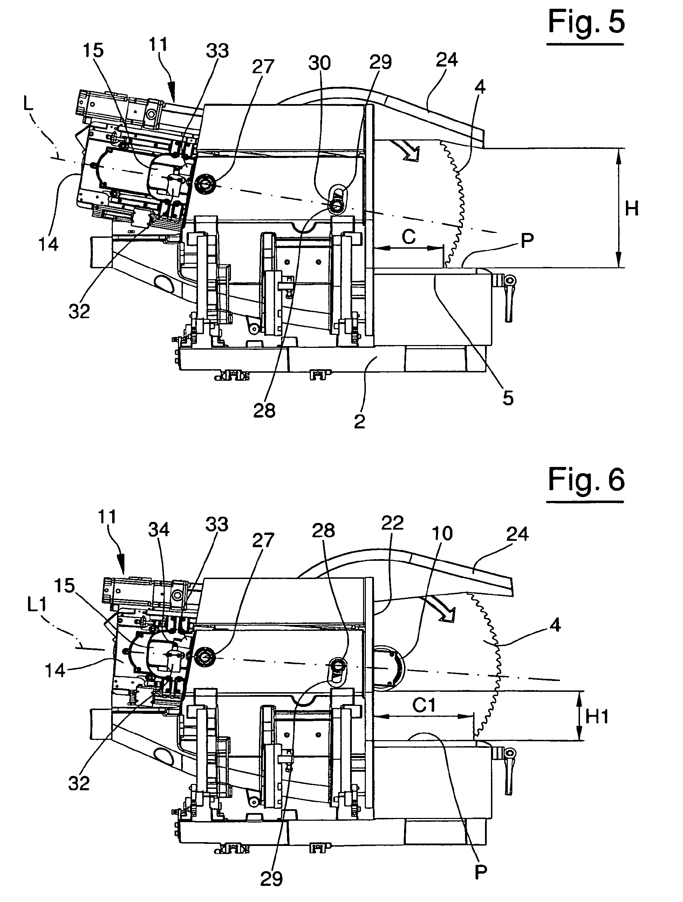

The driving device is configured such as to move the centre of the blade 4 in a cutting path arranged along a line L, shown in Figure 5. In the illustrated example, the line L, and consequently the cutting path, is rectilinear.

The cutting path can be inclined downwards, such that when the blade 4 is neared to the bar 20 to be cut, the height of the centre of the blade 4 measured with respect to the rest plane P progressively diminishes. This enables the blade 4 to penetrate into the bar 20 to be cut from above in a downwards direction.

The blade 4 moves along the cutting path and always remains in the same plane.

The blade 4 is rotatably supported by a carriage 14, that can be moved by the advancement device forwards and backwards along the movement direction M. Apart from the blade 4, the carriage 14 can also support the rotating device which rotates the blade 4 about the rotation axis O. In particular, the carriage 14 can support the motor 12 and the transmission device housed in the housing 13. In this way, when the advancement device moves the blade 4 along the movement direction M, the rotation device also moves in the same direction.

The cutting head 3 comprises a support element 15 for supporting the carriage 14, for example for slidingly supporting the carriage 14.

The advancement device can comprise an actuator 16 so conformed as to move the carriage 14 forwards and backwards in the movement direction M. To this end, the actuator 16 can have a body fixed to the carriage 14 and a stem that is fixed relative to the support element 15. The support element 15 is provided with guide means, not illustrated, for keeping the carriage 14 guided while the carriage 14 is displaced in the movement direction M by the actuator 16.

The cutting unit 1 further comprises an inclination device for modifying an angle formed between the blade 4 and the rest plane P. For this purpose, the inclination device is so configured as to rotate the cutting head 3 about an inclination axis A, shown in Figure 2. The inclination axis A is substantially horizontal.

The cutting head 3 can comprise a cradle-shaped base 17 which supports the support element 15. The cradle-shaped base 17 can be provided with a plurality of arched guides 18, for example delimited by portions of cylindrical surface, which project from a lower region of the cradle-shaped base 17. The arched guides 18 can slide along corresponding supports 19 mounted on the base 2.

The inclination device comprises an actuator organ 25 for moving the cradle-shaped base 17 about the inclination axis A. The actuator organ 25 can comprise a body fixed to the base 2 and a stem hinged to the cradle-shaped base 17. In this way, when the stem exits from the body of the actuator organ 25, or returns into the body, the cradle-shaped base 17 is rotated about the inclination axis A, while the arched guides 18 slide along the supports 19. The angle α between the blade 4 and the rest plane P, shown in Figure 4, is thus modified, which enables the bar 20 to be cut along a cutting section having a desired inclination.

For example, if the blade 4 is perpendicular to the rest plane P, the cut can be made at 90°, i.e. the bar 20 can be cut along a section that is perpendicular to a longitudinal axis of the bar. If instead the blade 4 forms an angle of 45° with the rest plane P, the cutting section along which the bar 20 is cut will be inclined by 45° with respect to the longitudinal axis of the bar 20. A bar cut in this way can be joined to a further bar cut in the same way such as to form an L-shaped element. The position of the inclination axis A about which the cradle-shaped base 17 rotates is independent of the position of the rest plane P, which enables free choice of the distance between the rest plane P and the rotation axis O of the blade 4. This distance can therefore be varied according to the cutting needs.

In order to vary the distance between the rest plane P and the rotation axis O of the blade 4, the rest element 5 is removably fixed to the base 2 and can be removed from the base 2 and substituted by a new rest element having a different height. The position of the rest roller 6, and in particular its height, is also adjustable such that the rest roller 6 is aligned with the new rest element.

The cutting unit 1 can function in two working modes, different from one another.

In a first working mode, called "normal", the flange 10 supporting the blade 4 is positioned internally of the case 23 not only in the rest condition but also when the blade 4 exits from the case 23 through the slit 9 in order to interact with the bar 20. This working mode corresponds to Figures 1, 2 and 5. As shown in Figure 2, when the blade 4 cuts a bar 20, the closing element 21 prevents the flange 10 from exiting from the case 23 towards the work zone 26.

In a second working mode, called "radial", when the cut is to be performed the flange 10 supporting the blade 4 exits the case 23 towards the bar 20 to be cut. In other words, when the blade 4 cuts a bar 20 in the second working mode, the flange 10 projects from the abutment surface 8 and is positioned above the rest plane P. This working mode is illustrated in Figures 3, 4 and 6.

The adjective "radial", which can be used with reference to the second working mode, derives from the fact that the blade 4 is moved along a radial direction such that the flange 10 can project from the abutment surface 8 in the working zone 26.

An important parameter for evaluating the performance of a cutting-off machine is the cutting capacity along a direction X that is parallel to the rest plane P i.e., in the illustrated example, along a horizontal direction. The cutting capacity along direction X corresponds to the maximum width of the bar 20 which can be cut by the cutting unit 1.

A further important parameter is the cutting capacity along a direction Y parallel to the abutment surface 8 i.e., in the illustrated example, along a vertical direction. The cutting capacity along the direction Y corresponds to the maximum height of the bar 20 which can be cut by the cutting unit 1.

The cutting capacity along the direction X and the cutting capacity along the direction Y depend on many factors, among which first and foremost is the diameter of the blade 4 and of the flange 10. In particular, the cutting capacity both along direction X and along direction Y increases if the diameter of the blade 4 increases, while it diminishes if the diameter of the flange 10 increases.

Also the distance between the rest plane P and the rotation axis O about which the blade 4 can rotate influences the cutting capacity of a cutting-off machine. If the above-mentioned distance increases, the cutting capacity along the direction X diminishes, while the cutting capacity along the direction Y increases.

A further factor influencing the cutting capacity of a cutting-off machine is the angle a formed between the blade 4 and the rest plane P. When this angle diminishes, i.e. when the cutting head 3 is inclined, the cutting capacity along the direction Y diminishes. The second working mode, or the radial working mode, enables the cutting capacity of the cutting-off machine to be increased along direction X because, with the diameter of the blade 4 being equal, the dimension of the portion of blade projecting from the case 23 in the direction X increases. This enables bars 20 to be cut which have a greater width, i.e. a greater dimension along the horizontal direction.

However, when the flange 10 exits from the case 23, the dimension of the flange 10 reduces the cutting capacity along the direction Y. The flange 10 which projects from the abutment surface 8 limits the maximum height of the bar 20 which can abut against the abutment surface 8 in order to be cut.

To prevent the cutting capacity along the direction Y from becoming excessively reduced in the second working mode, i.e. the "radial" mode, the cutting unit 1 comprises a path modifying device which enables modifying the path along which the centre of the blade 4 moves, for example by modifying the inclination of the line L.

In particular, owing to the path modifying device, the path that the blade 4 follows in order to interact with the bar 20, or at least a terminal part of the path, can be displaced upwards in the second working mode with respect to the first working mode.

In this way, the path along which the flange 10 moves when the flange 10 exits from the abutment surface 8 has a terminal part that is arranged at a greater height than the height the path would have if the flange 10 were to move along the line L. This enables an increase in the maximum height of the cross section of the bars 20 that can be processed by the cutting unit 1, with respect to a case in which the path modifying device were absent.

As can be seen in Figure 2, the path modifying device comprises a pivoting connecting system which connects the support element 15 to an element fixed relative to the cradle-shaped base 17, for example to the case 23. The support element 15 which, via the carriage 14, supports the flange 10, can thus be pivoted about an adjustment axis R with respect to the cradle-shaped base 17.

The pivoting connecting system comprises a hinge element 27 about which the support element 15 can oscillate. The hinge element 27 can be shaped as an articulated pin by which the support element 15 is pivoted to the case 23. The cutting unit 1 further comprises a selecting device for selecting the desired working mode. The selecting device can comprise a selecting element, for example a selecting pin 28, arranged in a fixed position relative to the support element 15. By acting on the selecting pin 28 it is possible to rotate the support element 15 about the adjustment axis R.

The selecting pin 28 is movable in a slot 29 obtained in the case 23, as shown in Figure 2. The slot 29 can have an arched shape.

Blocking means are provided, for example a blocking collar 30, shown in Figure 5, for blocking the selecting pin 28 in a desired position in the slot 29.

By moving the selecting pin 28 in the slot 29, it is possible to rotate the support element 15 about the hinge element 27. This enables the inclination of the support element 15 to be varied with respect to the case 23.

As previously explained, the support element 15 is provided with guide means along which the carriage 14 can slide when the carriage 14 is moved by the actuator 16 in the movement direction M. By varying the inclination of the support element 15 with respect to the case 23, the inclination of the guide means, which guide the carriage 14 when the blade 4 exits from the abutment surface 8, is consequently varied. As a consequence, the path followed by the points of the blade 4 for engaging with a bar 20 to be cut, and in particular the path followed by the centre of the blade 4, is modified.

The selecting pin 28 is movable between a lowered position, in which the selecting pin 28 engages in a lower portion of the slot 29, and a raised position, in which the selecting pin 28 engages in an upper portion of the slot 29.

The lowered position is shown in Figures 1, 2 and 5 and corresponds to the first working mode or normal working mode. The raised position is shown in Figures 3 and 6 and corresponds to the second working mode or radial working mode.

In the lowered position, the support element 15 has been rotated in a clockwise direction about the hinge element 27. A front end of the support element 15, i.e. an end of the support element 15 proximal to the front wall 22, is therefore in a downwardly-inclined position. The position of the support element 15 determines the inclination of the path along which the centre of the blade 4 is movable, since the carriage 14 and the guide means along which the carriage 14 can slide are supported by the support element 15.

In this position, as shown in Figure 5, the centre of the blade 4 can be moved in a cutting path extending along the line L, which is downwardly-inclined, such that the blade 4 exits from the abutment surface 8 for cutting the bar 20 resting on the rest plane P.

In the first working mode, the closing element 21 is fixed to the front wall 22 of the case 23. The closing element 21, even though cut into two parts by the blade 4 during the first cut, as shown in Figure 2, prevents the flange 10 from exiting from the case 23. The cutting capacity of the blade 4 along the direction X is denoted by C in Figure 5 and is equal to the dimension, measured along the direction X, of the maximum portion of blade 4 which exits from the case 23 at the rest plane P.

In the second working mode, or radial working mode, the selecting pin 28 is brought into the raised position by rotating the support element 15 upwards about the hinge element 27. In the example of Figure 6, this rotation is in the anticlockwise direction. Consequently, the guide means included in the support element 15 for guiding the carriage 14 when it is moved in the movement direction M are rotated in an anticlockwise direction. Further, the whole driving group 11, having the function of driving the blade 4 such as to enable the blade 4 to cut the bar 20, is rotated in an anticlockwise direction.

Consequently the blade 4 exits from the abutment surface 8 and moves along a modified path which is less downwardly-inclined than the path followed in the first working mode. In particular, as shown in Figure 6, the centre of the blade 4 moves by following a modified cutting path extending along a modified line L1 which is less downwardly-inclined, i.e. closer to the horizontal direction, than the line L of the first working mode.

In the shown example, the modified cutting path is still slightly inclined downwards. It is however theoretically possible to design the cutting unit 1 such that the modified cutting path is horizontal or upwardly-inclined.

In the second working mode, or radial working mode, the closing element 21, or at least the portion of the closing element 21 positioned in front of the flange 10, is removed from the front wall 22. An opening 31 is thus made accessible, the opening 31 being made in the front wall 22, as shown in Figure 3. The dimensions of the opening 31 are selected such that the flange 10 can pass through the opening 31. In this way, when the blade 4 is moved in the movement direction M towards the work zone 26, the flange 10 passes through the opening 31 beyond the front wall 22. The flange 10 is thus brought into the work zone 26, above the rest plane P and above the bar 20 to be cut.

Owing to the flange 10 which can be positioned in the work zone 26, the dimension of the portion of blade 4 which exits from the abutment surface 8 is increased, said dimension being measured in a direction parallel to the rest plane P, i.e. in direction X. Thus the cutting capacity of the blade 4 along the direction X is improved. This is clearly visible in Figure 6, where the cutting capacity of the blade 4 along the direction X is denoted by C1.

Comparing Figure 6 with Figure 5, it is clear that the cutting capacity C1 along the direction X in the second working mode is significantly greater than the corresponding cutting capacity C in the first working mode.

In Figure 6, the cutting capacity of the blade 4 in the direction perpendicular to the rest plane P, i.e. along the direction Y, is denoted by H1 and is equal to the distance between the flange 10 and the rest plane P, in an end-stroke position of the flange 10. Bars of a height greater than H1 cannot be cut in the second working mode, as they would strike against the flange 10 during the cutting operation.

It is clear that, in the second working mode, the cutting capacity in the direction perpendicular to the rest plane P, i.e. along the direction Y, is reduced with respect to the first working mode.

In the first working mode, the cutting capacity along the direction Y, denoted by H in Figure 5, is limited only by the protection element 24, which is positioned at a greater height than the flange 10.

However, by displacing the cutting path of the centre of the blade 4 upwards in the second working mode it is possible to avoid an excessive reduction in the cutting capacity along the direction Y.

In any case, the reduction of the cutting capacity along the direction Y is fully compensated for by the increase in cutting capacity along direction X obtained in the second working mode.

The second working mode is therefore especially suitable for cutting bars 20 the cross section of which is relatively wide and low, i.e. bars 20 whose cross section has a dimension, measured parallel to the rest plane P, that is greater than the dimension measured perpendicularly to the rest plane P, as shown in Figure 3. Bars of this type could not be cut in the first working mode.

Owing to the good cutting capacity along the direction X, the second working mode further allows two bars to be cut simultaneously, both the bars resting on the rest plane P and being arranged one by a side of another. In this way, the productivity of the cutting-off machine can be considerably increased.

Figure 4 shows the cutting head 3 in the second working mode, i.e. in the radial working mode, in a configuration in which the cutting head 3 has been rotated about the inclination axis A such that the blade 4 forms an angle α of less than 90° with the rest plane P. This configuration is the inclined cutting configuration. In the illustrated example, the angle α is 45°.

In the inclined cutting configuration, the cutting capacity of the blade 4 along the direction Y is reduced because the flange 10 is further lowered, i.e. it is further neared to the rest plane P with respect to a case in which the blade 4 is perpendicular to the rest plane P. However, the cutting capacity along the direction X, in the second working mode, is considerably greater than in the first working mode, even in the inclined cutting configuration.

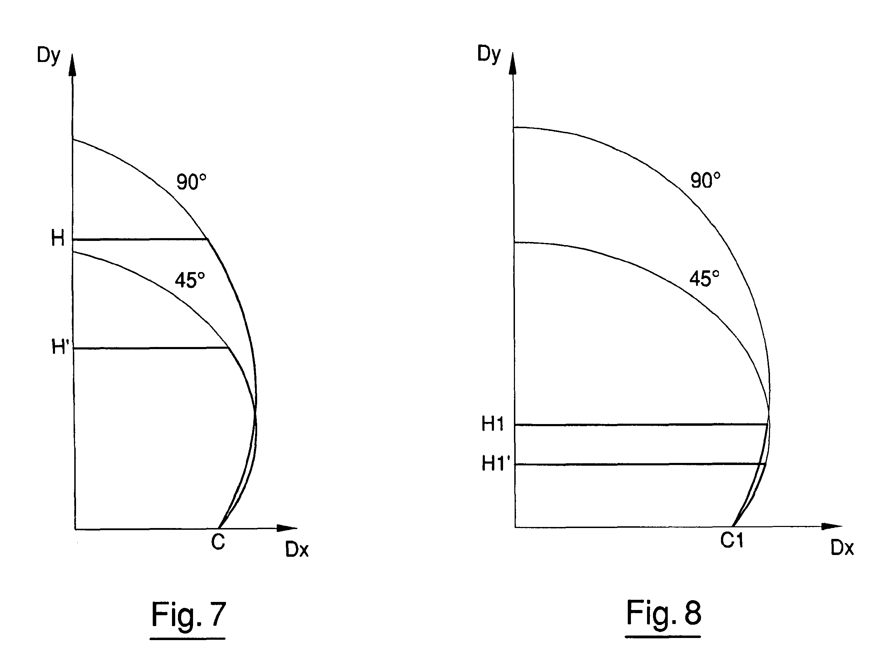

The above considerations are confirmed by an analysis of the cutting diagrams represented in Figures 7 and 8.

The cutting diagram is a diagram showing, on the x axis, the maximum dimension Dx of the portion of blade 4 that exits from the abutment surface 8, measured parallel to the rest plane P, i.e. measured along the direction X. The y axis shows the maximum dimension Dy of the portion of blade 4 which exits from the abutment surface 8, measured perpendicularly to the rest plane P, i.e. along the direction Y.

In practice, the curves obtained by expressing the Dx and Dy values on the cutting diagram correspond to the projection on the plane XY of the perimeter of the portion of blade 4 which exits from the abutment surface 8 in the considered cutting configuration.

The cutting diagram of Figure 7 relates to the first working mode, or the normal working mode. The cutting diagram of Figure 8 relates to the second working mode, or the radial working mode.

Both cutting diagrams include the curves corresponding to a configuration in which the blade forms an angle of 90° with the rest plane P and to an inclined configuration in which the blade forms an angle of 45° to the rest plane P.

For each curve reported in the cutting diagrams, a horizontal segment is shown which indicates an upper limit of the cutting capacity along the direction Y. In the first working mode, the upper limit is defined by the position of the protection element 24, while in the second working mode the upper limit is defined by the position of the flange 10.

The area delimited by a horizontal segment and by the portion of the respective arranged below the segment corresponds to the portion of blade 4 which can be usefully used for cutting.

From the cutting diagrams illustrated in Figures 7 and 8, it is possible to determine the cutting capacity of the blade along the direction X and along the direction Y, in the cutting configuration to which the diagrams refer.

In particular, in the first working mode, the cutting capacity along the direction X is denoted by C and does not change if the blade is inclined, because the dimension measured along the direction X of the portion of blade 4 which exits from the abutment surface 8 at the rest plane P is not influenced by the inclination of the blade 4.

The cutting capacity along the direction Y in a position in which the blade 4 is perpendicular to the rest plane P is denoted by H in Figure 7. H' denotes the cutting capacity along the direction Y in a configuration in which the blade 4 is inclined by 45° with respect to the rest plane P.

Likewise, in the second working mode (Figure 8) the cutting capacity along the direction X is denoted by C1, while H1 and H1' denote the cutting capacity along the direction Y respectively at 90° and 45°.

It can immediately be noted that the second working mode enables the cutting capacity along the direction X to be maximized, while the first working mode enables the cutting capacity along the direction Y to be maximized.

The cutting unit 1 is therefore extremely versatile, because it can be used both for cutting bars having a high and relatively narrow cross section, i.e. extending mainly vertically (in the first working mode) and for cutting bars having a wide and low cross section, i.e. extending mainly horizontally (in the second working mode).

In addition, by modifying the height of the rest plane P, the range of bars that can be processed by the cutting unit 1 can be further broadened.

The cutting unit 1 further comprises sensor means for determining which working mode has been selected.

The sensor means can comprise a sensor element 32, shown in Figures 5 and 6, suitable for detecting the position of the support element 15 with respect to the case 23. The sensor element 32 can be arranged on the opposite side of the hinge element 27 with respect to the blade 4. The sensor element 32 can be fixed to the support element 15 such as to interact with an opposing member 33 fixed to the case 23. In an embodiment that is not illustrated, the opposing member 33 can be fixed to the support element 15 while the sensor element 32 can be fixed to the case 23.

In the first working mode, the sensor element 32 is in contact with the opposing element 33.

In the second working mode, the support element 15 is rotated in an anticlockwise direction about the hinge element 27 and the sensor element 32 detaches from the opposing member 33.

A control unit connected to the sensor element 32 is able to detect whether the sensor element 32 is in contact with the opposing member 33 or whether it is distanced from the opposing member 33. In this way, the control unit knows whether the cutting unit is arranged in the first or in the second working mode.

The sensor element 32 can comprise, for example, a micro-switch provided with an end to which a wheel 34 is fixed, shown in Figure 6. In the first working mode, as shown in Figure 5, the opposing member 33 is in contact with the wheel 34 and closes an electric circuit in which the micro-switch is included. In the second working mode, as shown in Figure 6, the opposing member 33 is distanced from the wheel 34. The electric circuit in which the micro-switch is included is therefore open. The sensor means can comprise at least one detector 35 arranged such as to detect presence or absence of the closing element 21 which closes the opening 31.

In the example shown in Figure 4, three detectors 35 are provided, but it would be possible to use a different number of detectors.

The detectors 35 can be positioned in an edge zone 36 of the front wall 22, the edge zone 36 surrounding the opening 31.

Each detector 35 can comprise a micro-switch having a pin exiting from a hole made in the edge zone 36.

When the closing element 31 is fixed to the front wall 22, i.e. in the first working mode, the closing element 31 is in contact with the pin of each detector 35 and pushes the pin internally of a body of the detector 35. The pin consequently closes the electric circuit in which the relative micro-switch is included.

If the closing element 31 is removed, such as to enable the flange 10 to be projected from the front wall 22 towards the work zone 26, the pin is no longer pushed towards the inside of the body of the corresponding detector 35 by the closing element 31. By effect of the return force exerted by an elastic element (not illustrated), the pin projects towards the work zone 26 and opens the electric circuit in which the micro-switch of the detector 35 is included.

In this way, the control unit knows that the closing element 31 has been removed and thus is aware of the fact that the cutting unit 1 has been brought into the second working mode.

When the cutting unit 1 works in the second working mode, a covering element (not illustrated) can be used instead of the closing element 31 in order to prevent the operator from accidentally touching the flange 10 which exits from the case 23. The covering element can be fixed to the front wall 22 at the edge zone 36, taking care however that the covering element does not interact with the detectors 35.

According to the working mode detected by the sensor means, the control unit sets the stroke of the carriage 14 in the movement direction M, such that the blade 4 is brought into contact with the bar 20 to be cut. In particular, in the second working mode the stroke of the carriage 14 is longer than in the first working mode. This is due to the fact that in the second working mode the stroke of the carriage 14 must be sufficient to bring not only a front portion of the blade 4 into the work zone 26, but also the flange 10.

If it is desired that during the cutting operation the flange 10 does not exit from the abutment surface 8, the selecting device selects the first working mode. For this purpose, the support element 15, together with all the components supported thereby, is rotated about the hinge element 27 in a clockwise direction in order to bring the selecting pin 28 into the lowered position. The selecting pin 28 is then blocked in this position by tightening the blocking collar 30.

The sensor element 32 is in contact with the opposing member 33, and sends a signal to the control unit such as to inform the control unit that the cutting unit 1 is working in the first working mode.

This is confirmed by the signal sent to the control unit by the detectors 35, which are activated by the closing element 21. The closing element has been fixed to the front wall 22 such as to close the opening 31.

The control unit then sets the short stroke for the carriage 14.

If necessary, the angle that the blade 4 forms with the rest plane P is modified, owing to the actuator organ 25 which acts on the cradle-shaped base 17.

The bar 20 to be cut can now be rested on the rest plane P and abutted against the abutment surface 8. The rest plane P and the abutment surface 8 enable the bar 20 to be cut to be precisely positioned on the cutting-off machine.

One or more pressing devices, not shown, acting on an upper face of the bar 20 and/or on a lateral face of the bar 20 opposite the face which abuts against the abutment surface 8, maintain the bar 20 blocked during the cut. The pressing devices push the bar 20 against the rest plane P and/or against the abutment surface 8.

The blade 4 can now be rotated by the motor 12 and contemporaneously advanced in the movement direction M, owing to the actuator 16 which moves the carriage 14. In this way, the blade 4 is brought to interact with the bar 20 in order to cut the bar 20 in the desired position.

After the cut has been made, the carriage 14 returns the blade 20 to inside the case 23.

When the cutting unit 1 is to be made to function in the second working mode, the blocking collar 30 is unscrewed such as to enable the support element 15 to be moved about the hinge element 27. The support element 15 is then rotated in an anticlockwise direction up to bringing the selecting pin 28 into the raised position in the slot 29. At this point the blocking collar 30 is tightened such as to block the selecting pin 28 and with it the support element 15.

The control unit detects that the cutting unit 1 has been placed in the second working mode because the sensor element 32 is no longer in contact with the opposing element 33.

The operator removes the closing element 21 from the opening 31 in order to enable the flange 10 to exit from the abutment surface 8. The covering element, not illustrated, can be fixed to the front wall 22 such as to prevent contact between the operator and the flange 10.

The detectors 35 send a signal to the control unit indicating absence of the closing element 21, such that the control unit recognises that the second working mode has been selected and therefore sets the carriage 14 to make the long stroke.

The blade 4 can now be moved for cutting the bar 20 that was previously positioned on the rest plane P.

The above-described cutting unit 1 can therefore pass very simply from the first working mode to the second working mode and vice versa, according to the type of bar to be cut.

## Claims

1. A cutting unit for a cutting-off machine, comprising a rest plane (P) for supporting a work-piece (20) to be cut, an abutment surface (8) against which a lateral face of the work-piece (20) can abut, a circular blade (4) fixed to a flange (10), the flange (10) being supported in a cutting head (12) which can be inclined about an inclination axis (A), the position of the inclination axis (A) being independent of the position of the rest plane (P), **characterised in that** the cutting unit (1) comprises a selecting device (28) for selecting a first working mode, in which the flange (10) is located behind the abutment surface (8) during cutting, or alternatively a second working mode, in which the flange (10) exits from the abutment surface (8) above the rest plane (P) during cutting.

2. A cutting unit according to claim 1, and further comprising a path modifying device (27) suitable for displacing upwards at least an end portion of the path which the blade (4) follows in order to interact with the work-piece (20), when the second working mode is selected.

3. A cutting unit according to claim 1 or 2, wherein the flange (10) is supported by a support element (15) which is pivotable about an adjustment axis (R) with respect to a base (17) of the cutting head (3).

4. A cutting unit according to claim 3, wherein the selecting device comprises a selecting element (28) which is fixed relative to the support element (15) for moving the support element (15) about the adjustment axis (R).

5. A cutting unit according to claim 4, wherein the selecting element comprises a selecting pin (28) which is movable in a slot (29) obtained in a case (23) of the cutting head (3), the case (23) being fixed relative to the base (17).

6. A cutting unit according to claim 5, wherein the support element (15) is connected to the case (23) by a hinge pin (27) arranged along the adjustment axis (R).

7. A cutting unit according to any one of claims 3 to 6, wherein the flange (10) is mounted on a carriage (14) which is slidingly movable along guide means provided in the support element (15), such that the blade (4) is moved towards to, or away from, the work-piece (20).

8. A cutting unit according to any one of claims 3 to 7, wherein the base (17) is shaped like a cradle suitable for being inclined about the inclination axis (A).

9. A cutting unit according to any one of claims 3 to 8, wherein the abutment surface (8) is fixed relative to the base (17).

10. A cutting unit according to any preceding claim, and further comprising sensor means (32, 35) for detecting whether the selecting device (28) has selected the first working mode or the second working mode.

11. A cutting unit according to claim 10, and further comprising a control unit suitable for setting a stroke of the blade (4) depending on the working mode detected by the sensor means (32, 35).

12. A cutting unit according to any preceding claim, wherein the abutment surface (8) has an opening (31) for passage of the flange (10), a closing element (21) being removably fixable to the abutment surface (8) for closing the opening (31) in the first working mode.

13. A cutting unit according to claim 12, as appended to claim 10 or 11, wherein the sensor means (32, 35) comprise a detector (35) suitable for detecting whether the closing element (21) is fixed to the abutment surface (8).

14. A cutting unit according to claim 10, as appended to claim 5 or 6, wherein the sensor means (32, 35) comprise a sensor element (32) interposed between the support element (15) and the case (23).

15. A cutting-off machine comprising a cutting unit (1) according to any preceding claim.

## Patentansprüche

1. Schneidvorrichtung für eine Trennmaschine, umfassend eine Auflageebene (P) zum Tragen eines zu schneidenden Werkstücks (20), eine Anschlagfläche (8), gegen die eine Seitenfläche des Werkstücks (20) anschlagen kann, eine Rundklinge (4), die an einem Flansch (10) fixiert ist, wobei der Flansch (10) in einem Schneidkopf (12) getragen wird, der um eine Neigungsachse (A) geneigt werden kann, wobei die Position der Neigungsachse (A) unabhängig von der Position der Auflageebene (P) ist, **dadurch gekennzeichnet, dass** die Schneidvorrichtung (1) eine Auswähleinrichtung (28) zum Auswählen eines ersten Betriebsmodus umfasst, in dem der Flansch (10) während des Schneidens hinter der Anschlagfläche (8) liegt oder alternativ eines zweiten Betriebsmodus, in dem der Flansch (10) während des Schneidens über der Auflageebene (P) von der Anschlagfläche (8) austritt.

2. Schneidvorrichtung nach Anspruch 1, ferner umfassend eine Einrichtung (27) zur Änderung der Bahn, die für das nach oben gerichtete Verschieben eines Endabschnitts der Bahn geeignet ist, der die Klinge (4) folgt, um mit dem Werkstück (20) zu interagieren, wenn der zweite Betriebsmodus ausgewählt wird.

3. Schneidvorrichtung nach Anspruch 1 oder 2, wobei der Flansch (10) von einem Trägerelement (15) getragen wird, das in Bezug auf eine Basis (17) des Schneidkopfs (3) um eine Justierachse (R) schwenkbar ist.

4. Schneidvorrichtung nach Anspruch 3, wobei die Auswähleinrichtung ein Auswählelement (28) umfasst, das in Bezug auf das Trägerelement (15) zum Bewegen des Trägerelements (15) um die Justierachse (R) fixiert ist.

5. Schneidvorrichtung nach Anspruch 4, wobei das Auswählelement einen Auswählbolzen (28) umfasst, der in einem in einem Gehäuse (23) des Schneidkopfs (3) erhaltenem Schlitz (29) beweglich ist, wobei das Gehäuse (23) in Bezug auf die Basis (17) fixiert ist.

6. Schneidvorrichtung nach Anspruch 5, wobei das Trägerelement (15) mit dem Gehäuse (23) durch einen Gelenkbolzen (27) verbunden ist, der entlang der Justierachse (R) angeordnet ist.

7. Schneidvorrichtung nach einem der Ansprüche 3 bis 6, wobei der Flansch (10) auf einem Schlitten (14) befestigt ist, der entlang von im Trägerelement (15) bereitgestellten Führungsmitteln gleitend beweglich ist, sodass die Klinge (4) auf das Werkstück (20) zu und davon wegbewegt wird.

8. Schneidvorrichtung nach einem der Ansprüche 3 bis 7, wobei die Basis (17) wie eine Wiege geformt und dazu geeignet ist, um die Neigungsachse (A) geneigt zu werden.

9. Schneidvorrichtung nach einem der Ansprüche 3 bis 8, wobei die Anschlagfläche (8) in Bezug auf die Basis (17) fixiert ist.

10. Schneidvorrichtung nach einem der vorangehenden Ansprüche, ferner umfassend Sensormittel (32, 35) zum Erfassen, ob die Auswähleinrichtung (28) den ersten Betriebsmodus oder den zweiten Betriebsmodus ausgewählt hat.

11. Schneidvorrichtung nach Anspruch 10, ferner umfassend eine Steuervorrichtung, die zum Einstellen eines Hubs der Klinge (4) in Abhängigkeit des von den Sensormitteln (32, 35) erfassten Betriebsmodus geeignet ist.

12. Schneidvorrichtung nach einem der vorangehenden Ansprüche, wobei die Anschlagfläche (8) eine Öffnung (31) zum Durchlauf des Flansches (10) aufweist, wobei an der Anschlagfläche (8) zum Verschließen der Öffnung (31) im ersten Betriebsmodus ein Verschlusselement (21) abnehmbar fixierbar ist.

13. Schneidvorrichtung nach Anspruch 12, wenn dieser von Anspruch 10 oder 11 abhängig ist, wobei die Sensormittel (32, 35) einen Detektor (35) umfassen, der dazu geeignet ist zu erfassen, ob das Verschlusselement (21) an der Anschlagfläche (8) fixiert ist.

14. Schneidvorrichtung nach Anspruch 10, wenn dieser von Anspruch 5 oder 6 abhängig ist, wobei die Sensormittel (32, 35) ein Sensorelement (32) umfassen, das zwischen dem Trägerelement (15) und dem Gehäuse (23) liegt.

15. Trennmaschine, umfassend eine Schneidvorrichtung (1) nach einem der vorangehenden Ansprüche.

## Revendications

1. Unité de coupe pour une machine à tronçonner, comprenant un plan d'appui (P) pour soutenir une pièce (20) à couper, une surface de butée (8) contre laquelle une face latérale de la pièce (20) peut se mettre en butée, une lame circulaire (4) fixée à une bride (10), la bride (10) étant soutenue dans une tête de coupe (12) qui peut être inclinée autour d'un axe d'inclinaison (A), la position de l'axe d'inclinaison (A) étant indépendante de la position du plan d'appui (P), **caractérisée en ce que** l'unité de coupe (1) comprend un dispositif de sélection (28) pour sélectionner un premier mode de fonctionnement, dans lequel la bride (10) est située à l'arrière de la surface de butée (8) durant la coupe, ou alternativement un deuxième mode de fonctionnement, dans lequel la bride (10) sort de la surface de butée (8) au-dessus du plan d'appui (P) durant la coupe.

2. Unité de coupe selon la revendication 1, et comprenant aussi un dispositif de modification de la trajectoire (27) pouvant déplacer vers le haut au moins une section terminale de la trajectoire que suit la lame (4) pour interagir avec la pièce (20), lorsque le deuxième mode de fonctionnement est sélectionné.

3. Unité de coupe selon la revendication 1 ou 2, dans laquelle la bride (10) est soutenue par un élément de soutien (15) pivotant autour d'un axe d'ajustage (R) par rapport à une base (17) de la tête de coupe (3).

4. Unité de coupe selon la revendication 3, dans laquelle le dispositif de sélection comprend un élément de sélection (28) fixe par rapport à l'élément de soutien (15) pour déplacer l'élément de soutien (15) autour de l'axe d'ajustage (R).

5. Unité de coupe selon la revendication 4, dans laquelle l'élément de sélection comprend un axe de sélection (28) pouvant se déplacer dans une encoche (29) réalisée dans un boîtier (23) de la tête de coupe (3), le boîtier (23) étant fixe par rapport à la base (17).

6. Unité de coupe selon la revendication 5, dans laquelle l'élément de soutien (15) est relié au boîtier (23) par un axe d'articulation (27) disposé le long de l'axe d'ajustage (R).

7. Unité de coupe selon les revendications 3 à 6, dans laquelle la bride (10) est montée sur un chariot (14) coulissant le long de moyens de guidage prévus sur l'élément de soutien (15), de sorte que la lame (4) s'approche ou s'éloigne de la pièce (20).

8. Unité de coupe selon les revendications 3 à 7, dans laquelle la base (17) est façonnée comme un berceau pouvant être incliné autour de l'axe d'inclinaison (A).

9. Unité de coupe selon les revendications 3 à 8, dans laquelle la surface de butée (8) est fixe par rapport à la base (17).

10. Unité de coupe selon l'une quelconque des revendications précédentes, comprenant aussi des moyens de détection (32, 35) pour détecter si le dispositif de sélection (28) a sélectionné le premier mode de fonctionnement ou le deuxième mode de fonctionnement.

11. Unité de coupe selon la revendication 10, comprenant aussi une unité de commande pouvant définir une course de la lame (4) en fonction du mode de fonctionnement détecté par les moyens de détection (32, 35).

12. Unité de coupe selon l'une quelconque des revendications précédentes, dans laquelle la surface de butée (8) présente une ouverture (31) pour faire passer la bride (10), un élément de fermeture (21) pouvant être fixé de façon amovible à la surface de butée (8) pour fermer l'ouverture (31) dans le premier mode de fonctionnement.

13. Unité de coupe selon la revendication 12, lorsque celle-ci est rattachée à la revendication 10 ou 11, dans laquelle les moyens de détection (32, 35) comprennent un détecteur (35) pouvant détecter si l'élément de fermeture (21) est fixe par rapport à la surface de butée (8).

14. Unité de coupe selon la revendication 10, lorsque celle-ci est rattachée à la revendication 5 ou 6, dans laquelle les moyens de détection (32, 35) comprennent un élément capteur (32) interposé entre l'élément de soutien (15) et le boîtier (23).

15. Machine à tronçonner comprenant une unité de coupe (1) selon l'une quelconque des revendications précédentes.
